# EUROPÄISCHE PATENTSCHRIFT

(11) **EP 4 505 857 B1**
(45) Veröffentlichungstag und Bekanntmachung des Hinweises auf die Patenterteilung: **20.05.2026**
(21) Anmeldenummer: 24182813.6
(22) Anmeldetag: 18.06.2024
(51) Int. Cl.: A01D 41/14

(54) **SELBSTFAHRENDER MÄHDRESCHER**
SELF-PROPELLED COMBINE HARVESTER
MOISSONNEUSE-BATTEUSE AUTOMOTRICE

(30) Priorität: 08.08.2023 DE 102023121095
(43) Veröffentlichungstag der Anmeldung: 12.02.2025
(73) Patentinhaber: CLAAS Selbstfahrende Erntemaschinen GmbH, 33428 Harsewinkel (DE)
(72) Erfinder: Füchtling, Christian, 48317 Drenstein Rinkerode (DE); Hinz, Patrick, 33428 Greffen (DE); Wielenberg, Andreas, 32049 Herford (DE)
(74) Vertreter: CLAAS Gruppe

(56) Entgegenhaltungen:
- EP-A2- 0 331 893
- US-A1- 2021 185 879
- US-A1- 2021 289 703
- US-A1- 2023 020 196
- US-B2- 11 510 365

## Beschreibung

Die vorliegende Erfindung betrifft einen selbstfahrenden Mähdrescher gemäß dem Oberbegriff des Anspruches 1. Weiterhin betrifft die vorliegende Erfindung ein Verfahren zum Betreiben eines selbstfahrenden Mähdreschers gemäß dem Oberbegriff des Anspruches 9.

Ein selbstfahrender Mähdrescher mit einem mehrteiligen Bandschneidwerk der eingangs genannten Art ist aus der EP 3 420 799 A1 bekannt. Die mehrteilige Ausgestaltung der Bandschneidwerke mit relativ zum Mittensegment schwenkbaren Seitensegmenten ermöglicht es breiteren Erntevorsätzen, bei der Ernte der Bodenkontur genauer zu folgen und somit mehr Erntegut abzuschneiden. Beim Erreichen eines Vorgewendes wird das Bandschneidwerk ausgehoben, wobei die Seitensegmente im Allgemeinen in eine Mittenstellung überführt werden, in welcher die Seitensegmente zum Mittensegment einen Winkel von etwa 180° einschließen, d.h. die Seitensegmente und das Mittensegment im Wesentlichen in einer horizontalen Ebene liegend orientiert sind.

In sehr hügeligen Bedingungen kann es allerdings vorkommen, dass nicht genug Bodenfreiheit vorhanden ist. Für Bandschneidwerke mit großer Arbeitsbreite ist dies besonders problematisch. In solchen Situationen ist es hilfreich, die flexible Anpassbarkeit des mehrteiligen Bandschneidwerks zu nutzen, um ein Aufsetzen auf dem Feldboden zu vermeiden. Eine manuelle Ansteuerung des Bandschneidwerks zum Ausheben erfolgt üblicherweise durch die Betätigung eines Schalters an einem Multifunktionsgriff, wobei die Seitensegmente in die Mittelstellung gebracht werden. Die manuelle Ansteuerung der Seitensegmente zum Ausschwenken über die Mittelstellung hinaus bedarf allerdings einer hohen Aufmerksamkeit seitens des Bedieners und muss durch eine zusätzliche Interaktion des Bedieners mit einer Bedieneinheit einer der Ansteuerung des Bandschneidwerks dienenden Steuereinheit erfolgen. Für die Fortsetzung des Erntevorgangs nach dem Durchfahren des Vorgewendes, muss der Bediener erneut mit der Steuereinheit interagieren, um die vom Normalbetrieb abweichende Einstellung zurückzusetzen. Wird dies unterlassen, werden die Seitensegmente unnötig weit relativ zum Mittensegment nach oben ausgeschwenkt. Ein unnötig weites Ausschwenken der Seitensegmente fördert den Verschleiß am Messerbalken.

EP 0 331 893 A2 betrifft einen Mähdrescher mit einem Bandschneidwerk ohne Seitensegmente.

US 11,510,365 B2 betrifft einen Mähdrescher mit Sensoren zur Erfassung der Winkelstellung von Seitensegmenten eines Bandschneidwerks.

US 2021/0289703 A1 betrifft einen Mähdrescher gemäß dem Oberbegriff des Anspruchs 1. Ähnliche Mähdrescher gehen aus US 2023/0020196 A1 und US 2021/0185879 A1 hervor.

Ausgehend vom vorstehend genannten Stand der Technik liegt der Erfindung die Aufgabe zugrunde, einen selbstfahrenden Mähdrescher sowie ein Verfahren zum Betreiben eines selbstfahrenden Mähdreschers bereitzustellen, wodurch sich eine einfachere und intuitivere Handhabung bei der manuellen Ansteuerung zum Ausheben der Seitensegmente erreicht wird.

Diese Aufgabe wird erfindungsgemäß durch einen selbstfahrenden Mähdrescher mit den Merkmalen des Anspruches 1 sowie ein Verfahren zum Betreiben eines selbstfahrenden Mähdreschers mit den Merkmalen des Anspruches 9 gelöst. Vorteilhafte Weiterbildungen sind Gegenstand der abhängigen Ansprüche.

Gemäß Anspruch 1 wird ein selbstfahrender Mähdrescher vorgeschlagen, der einen Einzugskanal, welcher zur Höhenverstellung durch Linearaktoren um eine horizontale Achse schwenkbar ist, sowie ein am Einzugskanal angeordnetes Bandschneidwerk, welches ein Mittensegment mit einem mittleren Rahmensegment und zwei Seitensegmente mit jeweils einem äußeren Rahmensegment, umfasst, wobei das jeweilige Seitensegment jeweils durch ein eine Schwenkachse umfassendes Rahmengelenk schwenkbar mit dem Mittensegment verbunden ist, wobei das jeweilige Seitensegment durch einen ansteuerbaren Aktuator relativ zum Mittensegment positionierbar ist. Erfindungsgemäß ist vorgesehen, dass der Mähdrescher eine Steuereinheit umfasst, die dazu ausgeführt und eingerichtet ist, die Aktuatoren anzusteuern, um die Seitensegmente in Abhängigkeit von der Höhenverstellung des Einzugskanals beim Ausheben des Bandschneidwerks relativ zum Mittensegment auszurichten.

Dem liegt die Überlegung zugrunde, das Handling beim manuell angesteuerten Ausheben des Bandschneidwerks dadurch zu vereinfachen und intuitiver zu gestalten, dass bei einer Betätigung nur eines Bedienelementes, mit welchem die Höhe des Einzugskanals verändert wird, die Seitensegmente relativ zum Mittensegment ausgerichtet werden, wobei die relative Ausrichtung von der aktuellen Höhe des Einzugskanals abhängt. Somit ist ein Ausschwenken über eine Mittelstellung hinaus allein durch die unterbrechungsfreie Betätigung des nur einen Bedienelementes durchführbar.

Hierzu ist erfindungsgemäß zumindest ein Sensor vorgesehen, welcher Signale für einen Schwenkwinkel des Einzugskanals generiert und an die Steuereinheit überträgt, die zur Bestimmung der Höhenverstellung des Einzugskanals von dem zumindest einen Sensor empfangene Signale auswertet. Als zumindest ein Sensor kann beispielsweise ein Drehpotentiometer an der Achse angeordnet sein, um die der Einzugskanal zur Höhenverstellung schwenkbar ist.

Insbesondere steuert die Steuereinheit in Abhängigkeit von einem in der Steuereinheit hinterlegten oder hinterlegbaren Schwellwert für den Schwenkwinkel die Aktuatoren erfindungsgemäß an, um die Seitensegmente in eine ausgelenkte Stellung zu überführen, in welcher die Seitensegmente unter einem, insbesondere maximal einnehmbaren, Winkel relativ zum Mittensegment hochgeschwenkt sind. Der Bediener kann somit beim manuellen Ausheben des Bandschneidwerks vorgeben, ob es zum Überschreiten des Schwellwertes kommt, um die äußeren Enden der Seitensegmente in eine maximal vom Boden beabstandete Stellung zu überführen. Dies kann insbesondere auch dann erforderlich sein, wenn beispielsweise seitliche Hindernisse bei einer Feldeinfahrt oder Feldausfahrt bei montiertem Bandschneidwerk passiert werden müssen. Der Bediener kann beim manuellen Ausheben des Bandschneidwerks nach dem Überschreiten des Schwellwertes durch das Unterbrechen des Vorgangs des manuellen Aushebens eine Auslenkung der Seitensegmente mit einem Wert für den Winkel vorgeben, der unterhalb des Werts für den sich einstellenden Winkels liegt, der sich in der maximal vom Boden beabstandeten Stellung der Seitensegmente einstellt. Somit lässt sich auch ein geringfügigeres Auslenken der Seitensegmente einstellen.

Insbesondere kann jeweils eine Sensoranordnung an den Rahmengelenken zur Überwachung des sich einstellenden Winkels zwischen dem Mittensegment und den Seitensegmenten angeordnet sein. Dies ermöglicht es, durch die Auswertung von Sensorsignalen der Sensoranordnungen durch die Steuereinheit, dem Bediener den sich aktuell einstellenden Winkel während des Vorgangs des manuellen Aushebens anzuzeigen. Bevorzugt können die Sensoranordnungen als Drehpotentiometer ausgeführt sein.

Weiterhin kann die Steuereinheit dazu ausgeführt und eingerichtet sein, die Ansteuerung der Aktuatoren in Abhängigkeit von der Höhenverstellung des Einzugskanals nur bei einem manuell ausgelösten Ausheben des Bandschneidwerks vorzunehmen.

Gemäß einer Weiterbildung kann die Steuereinheit in einem Automatikmodus betreibbar sein, in welchem ein erster und ein zweiter Sollwert für den Schwenkwinkel vorgebbar sind, um in Abhängigkeit von diesen Sollwerten die Seitensegmente beim Ausheben des Bandschneidwerks automatisch relativ zum Mittensegment auszurichten. Der Bediener des Mähdreschers kann hierzu die beiden Sollwerte für den Schwenkwinkel vorgeben bzw. einstellen, die unterhalb des Schwellwertes liegen, um beim Befahren des Feldes von einer manuellen Ansteuerung des Abstands des Bandschneidwerks zum Boden sowie beim Durchfahren eines Vorgewendes von der manuellen Ansteuerung für das Ausheben des Bandschneidwerks entlastet zu werden. Der Automatikmodus kann durch den Bediener aktiviert werden und wird von der Steuereinheit beispielsweise in Abhängigkeit von Signalen eines Routenplanungsmoduls ausgeführt, wenn das Erreichen eines Vorgewendes detektiert wird. Beim Erreichen eines Vorgewendes wird das Bandschneidwerk im Automatikmodus gemäß dem zweiten Sollwert, der größer als der erste Sollwert ist, in seine Mittenstellung überführt, in welcher sich die Seitensegmente und das Mittensegment im Wesentlichen auf einer Höhe befinden.

Des Weiteren kann die Steuereinheit dazu eingerichtet sein, den Automatikmodus beim Ausheben des Bandschneidwerks durch eine manuelle Eingabe mittels einer Bedieneinheit zu übersteuern. Erkennt der Bediener des Mähdreschers eine Situation, in welcher das automatische Ausheben des Bandschneidwerks und damit verbunden das Ausschwenken der Seitensegmente in die Mittelstellung nicht ausreicht, um eine Kollision eines oder beider Seitensegmente mit dem Boden oder einem sonstigen Hindernis in den äußeren Randbereichen der Seitensegmente zu vermeiden, kann dieser das automatische Ausheben des Bandschneidwerks übersteuern. Hierzu kann ein Bedienelement, welches Teil der Bedieneinheit ist, verwendet werden, welches der Ansteuerung der Linearaktoren zur Höhenverstellung des Einzugskanals dient. Dazu kann das Bedienelement, mit dem die Höhenverstellung des Einzugskanals manuell angesteuert wird, dauerhaft betätigt werden, bis der für den Schwenkwinkel in der Steuereinheit hinterlegte Schwellwert überschritten wird. Bevorzugt ist die Bedieneinheit als Multifunktionsgriff ausgeführt, der mehrere Bedienelemente aufweist. Der Multifunktionsgriff befindet sich in der Regel auf einer Armlehne am Fahrersitz und ermöglicht eine ergonomische Bedienung des Mähdreschers und des Bandschneidwerks, ohne eine Änderung der Sitzposition des Bedieners oder durch ein Umgreifen.

Bevorzugt können die Aktuatoren als Hydraulikzylinder ausgeführt sein. Weiterhin können die als Hydraulikzylinder ausgeführten Aktuatoren mit einem Druckspeicher in Verbindung stehen, sodass diese als hydraulische Federn verwendbar sind.

Die eingangs gestellte Aufgabe wird weiterhin durch ein Verfahren zum Betreiben eines selbstfahrenden Mähdreschers mit den Merkmalen des nebengeordneten Anspruchs 9 gelöst.

Gemäß dem Anspruch 9 wird ein Verfahren zum Betreiben eines selbstfahrenden Mähdreschers vorgeschlagen, umfassend einen Einzugskanal, welcher zur Höhenverstellung durch Linearaktoren um eine horizontale Achse geschwenkt wird, sowie ein am Einzugskanal angeordnetes Bandschneidwerk, welches ein Mittensegment mit einem mittleren Rahmensegment und zwei Seitensegmente mit jeweils einem äußeren Rahmensegment aufweist, wobei das jeweilige Seitensegment durch ein eine Schwenkachse umfassendes Rahmengelenk schwenkbar mit dem Mittensegment verbunden ist, wobei das jeweilige Seitensegment durch einen ansteuerbaren Aktuator relativ zum Mittensegment positioniert wird, wobei der Mähdrescher durch eine Steuereinheit angesteuert wird, durch welche die Aktuatoren angesteuert werden, um die Seitensegmente in Abhängigkeit von der Höhenverstellung des Einzugskanals beim Ausheben des Bandschneidwerks relativ zum Mittensegment auszurichten. Auf die erfindungsgemäß Vorteile des Mähdreschers darf verwiesen werden.

Insbesondere wird durch zumindest einen Sensor Signale für einen Schwenkwinkel des Einzugskanals generiert und an die Steuereinheit übertragen, durch welche die Signale zur Bestimmung der Höhenverstellung des Einzugskanals ausgewertet werden.

Weiterhin werden in Abhängigkeit von einem in der Steuereinheit hinterlegten oder hinterlegbaren Schwellwert für den Schwenkwinkel die Seitensegmente erfindungsgemäß in eine ausgelenkte Stellung überführt, in welcher die Seitensegmente unter einem, insbesondere maximal einnehmbaren, Winkel relativ zum Mittensegment hochgeschwenkt sind. Die äußeren Enden der Seitensegmente werden dabei ein eine das Mittensegment überragende Stellung überführt.

Der Bediener kann beim manuellen Ausheben des Bandschneidwerks nach dem Überschreiten des Schwellwertes durch das Unterbrechen des Vorgangs des manuellen Aushebens eine Auslenkung der Seitensegmente mit einem Wert für den Winkel vorgeben, der unterhalb des Wertes für den sich einstellenden Winkel liegt, der sich in der maximal vom Boden beabstandeten Stellung der Seitensegmente einstellt. Somit lässt sich auch ein geringfügigeres Auslenken der Seitensegmente einstellen.

Des Weiteren kann die Ansteuerung der Aktuatoren in Abhängigkeit von der Höhenverstellung des Einzugskanals nur bei einem manuell ausgelösten Ausheben des Bandschneidwerks vorgenommen werden. Ein aktiver Automatikmodus kann dabei durch das manuell ausgelöste Ausheben des Bandschneidwerks übersteuert werden. Hierzu kann der Bediener des Mähdreschers das für die Höhenverstellung vorgesehene Bedienelement dauerhaft betätigen, bis der aktuelle Schwenkwinkel des Einzugskanals den dafür in der Steuereinheit hinterlegten Schwellwert überschreitet.

Die vorliegende Erfindung wird nachstehend anhand eines in den Zeichnungen dargestellten Ausführungsbeispieles näher erläutert.

Es zeigen:
- Fig. 1: eine Frontalansicht eines Mähdreschers mit einem daran angeordneten Bandschneidwerk;
- Fig. 2: eine schematische Ansicht des Bandschneidwerkes;
- Fig. 3: eine Teilansicht des Bandschneidwerkes gemäß Fig. 2 von hinten;
- Fig. 4: in Ansicht (A) schematisch eine Mittenstellung des Bandschneidwerks und in Ansicht (B) eine ausgelenkte Stellung des Bandschneidwerks; und
- Fig. 5: schematisch und exemplarisch eine Teildarstellung einer Bedienanzeige des Mähdreschers.

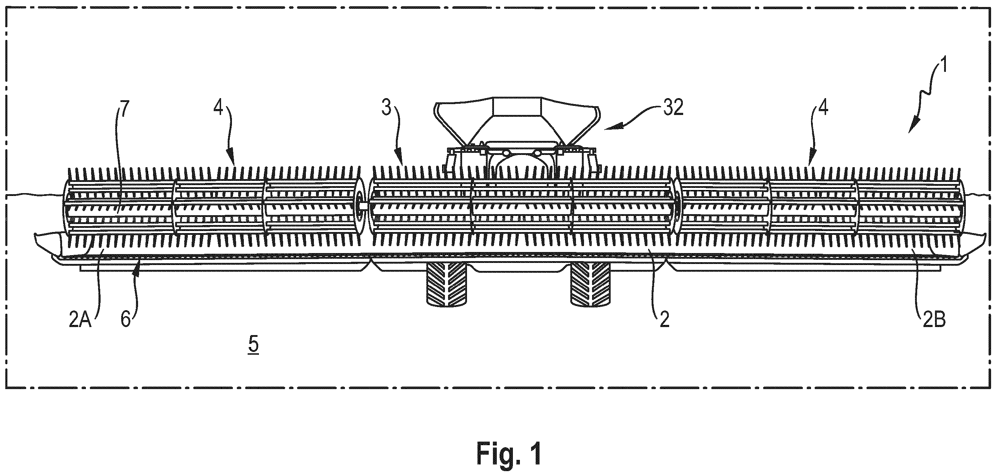

In Fig. 1 ist eine Frontalansicht eines Mähdreschers 32 mit einem daran angeordneten Bandschneidwerk 1 dargestellt. Das Bandschneidwerk 1 befindet sich in einer durch einen Einzugskanal 12 des Mähdreschers 32 ausgehobenen Stellung, d.h. zum Boden 5 beabstandeten Stellung. Der Einzugskanal 12 ist zur Höhenverstellung durch - nicht dargestellte - Linearaktoren um eine horizontal verlaufende Achse 13 schwenkbar am Mähdrescher 32 angelenkt.

Das Bandschneidwerk 1 weist einen segmentierten Rahmen auf. Das Bandschneidwerk 1 weist ein Mittensegment 3 mit einem mittleren Rahmensegment 2 und zwei Seitensegmente 4 mit jeweils einem äußeren Rahmensegment 2A, 2B auf. Die Seitensegmente 4 sind benachbart zu dem Mittensegment 3 angeordnet. An dem Mittensegment 3 und den Seitensegmenten 4 ist auf der dem segmentierten Rahmen gegenüberliegenden Vorderseite des Bandschneidwerkes 1 ein bodenkopierender Messerbalken 6 angeordnet, der sich im Wesentlichen über die gesamte Breite des Bandschneidwerkes 1 erstreckt. Weiterhin ist eine segmentiert ausgeführte Haspel 7 vorgesehen, die sich im Wesentlichen über die gesamte Breite des Bandschneidwerkes 1 erstreckt.

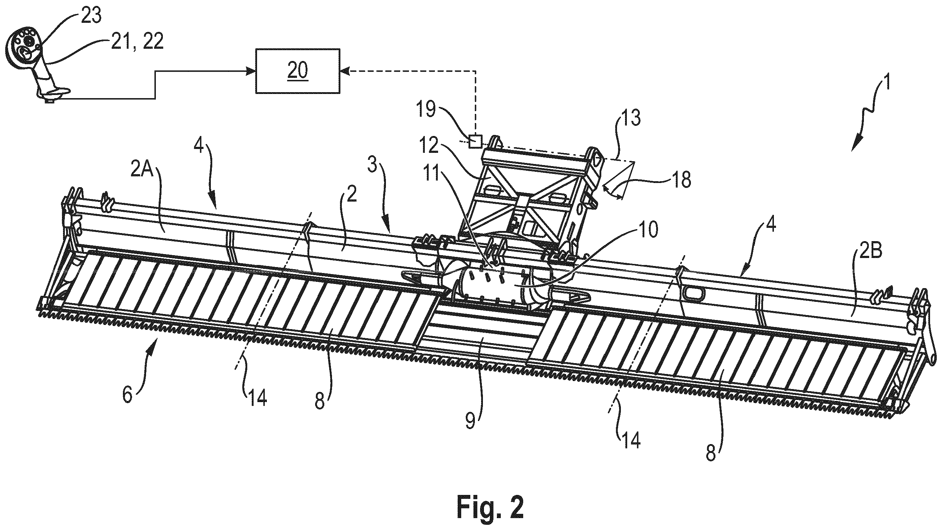

Die Darstellung in Fig. 2 zeigt eine schematische Ansicht des Bandschneidwerkes 1. Von dem Messerbalken 6 abgetrenntes Erntegut wird einer hinter dem Messerbalken 6 angeordneten Fördervorrichtung zugeführt, die auf den jeweiligen Seitensegmenten 4 als ein endlos umlaufendes Förderband 8 ausgeführt ist. Die endlos umlaufenden Förderbänder 8 sind benachbart zu dem Mittensegment 3 angeordnet, um von dem Messerbalken 6 abgeschnittenes Erntegut seitwärts, d.h. quer zur Fahrtrichtung des Mähdreschers 32, in Richtung des Mittensegments 3 zu transportieren und einer als angetriebenen Einzugswalze 10 ausgeführten Einzugsvorrichtung des Bandschneidwerks 1 zuzuführen. Der Mittenabschnitt 3 umfasst ebenfalls ein endlos umlaufendes Förderband 9. Das Förderband 9 des Mittensegments 3 fördert dabei quer zur Förderrichtung der seitwärts fördernden Förderbänder 8 der Seitensegmente 4. Die Einzugswalze 10 führt das von den endlos umlaufenden Förderbändern 8 bzw. 9 dem Mittenabschnitt 3 seitlich zugeführte Erntegut einer in dem mittleren Rahmensegment 2 vorgesehenen, hinter der Einzugswalze 10 befindlichen Öffnung 11 zu. Durch die Öffnung 11 wird das aufgenommene Erntegut durch den am Mähdrescher 32 angeordneten Einzugskanal 12, an dem das Bandschneidwerk 1 lösbar befestigt ist, dem Mähdrescher 32 zur weiteren Verarbeitung zugeführt. Im Einzugskanal 12 ist eine Fördervorrichtung angeordnet, welche das von der Einzugswalze 10 zugeführte Erntegut annimmt und in den Mähdrescher 32 zur weiteren Bearbeitung weiterfördert.

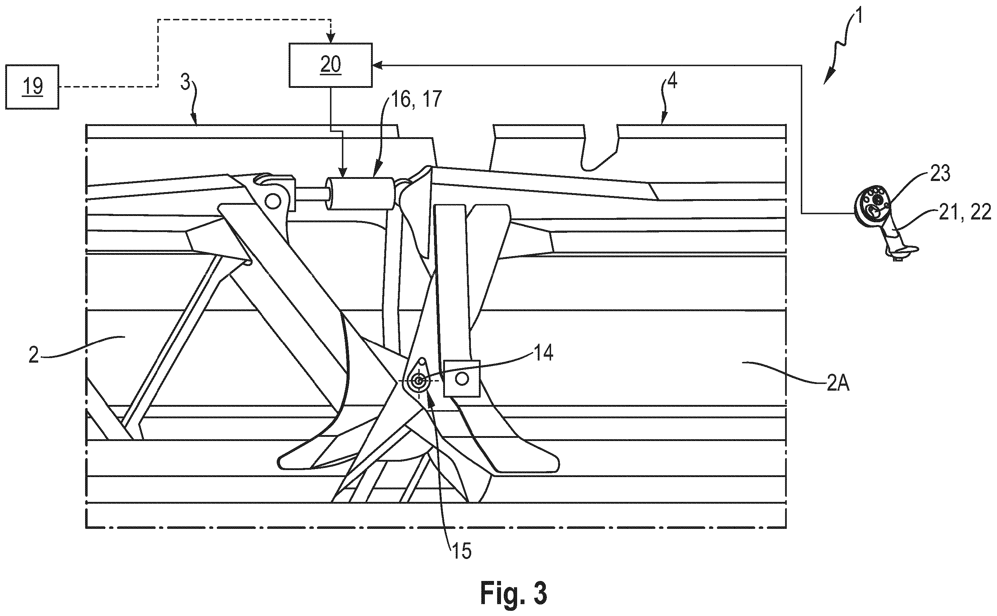

In Fig. 3 ist eine Teilansicht des Bandschneidwerkes 1 gemäß Fig. 2 von hinten dargestellt. Das jeweilige Seitensegment 4 ist durch ein eine Schwenkachse 14 umfassendes Rahmengelenk 15 schwenkbar mit dem Mittensegment 3 verbunden. Das jeweilige Seitensegment 4 ist durch einen ansteuerbaren Aktuator 16 durch Schwenken um die Schwenkachse 14 relativ zum Mittensegment 3 positionierbar ist. Der Aktuator 16 ist hier und vorzugsweise als doppeltwirkender Hydraulikzylinder 17 ausgeführt.

Der Mähdrescher 32 umfasst eine Steuereinheit 20, die zur Ansteuerung der Linearaktoren zur Höhenverstellung des Einzugskanals 12 und der Aktuatoren 16 am Bandschneidwerk 1 eingerichtet ist. Am Einzugskanal ist zumindest ein Sensor 19 vorgesehen ist, welcher Signale für einen Schwenkwinkel 18 des Einzugskanals 12 generiert und an die Steuereinheit 20 überträgt. Die Steuereinheit 20 wertet zur Bestimmung der Höhenverstellung des Einzugskanals 12 von dem zumindest einen Sensor 19 empfangene Signale aus.

Weiterhin ist die Steuereinheit 20 mit einer in der Kabine des Mähdreschers 32 angeordneten Bedieneinheit 21 verbunden. Die Bedieneinheit 21 ist hier und vorzugsweise als ein Multifunktionsgriff 22 ausgeführt, welcher mit mehreren Bedienelementen 23 versehen ist. Eines der Bedienelemente 23 dient der manuellen Höhenverstellung des Einzugskanals 12. Durch eine dauerhafte manuelle Betätigung des Bedienelementes 23 lässt sich der Einzugskanal 12 anheben oder absenken. Der Multifunktionsgriff befindet sich in der Regel auf einer Armlehne am Fahrersitz und ermöglicht eine ergonomische Bedienung des Mähdreschers 32 und des Bandschneidwerks 1, ohne eine Änderung der Sitzposition des Bedieners oder durch ein Umgreifen.

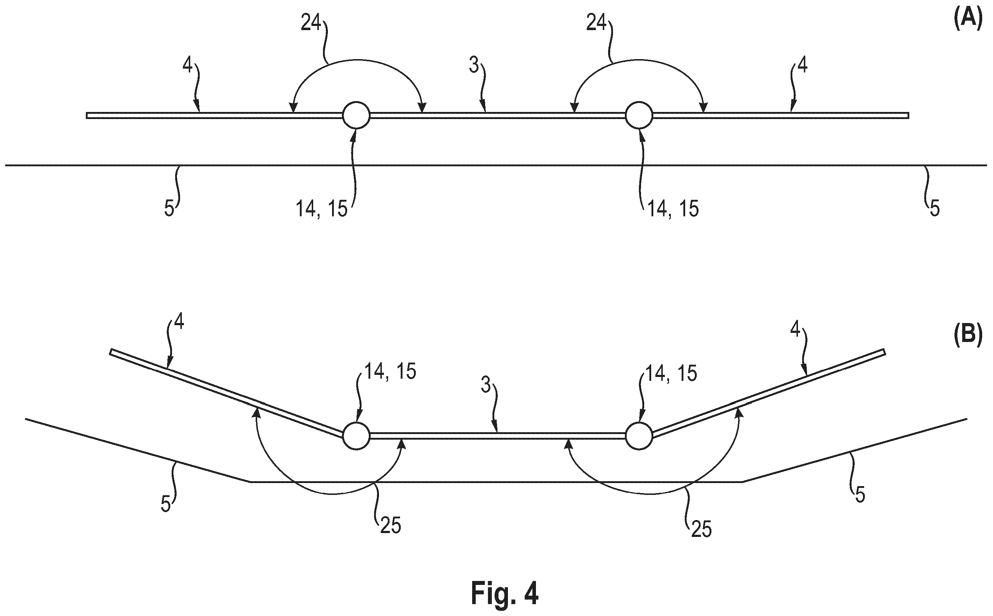

Fig. 4 zeigt in Ansicht (A) schematisch eine Mittenstellung des Bandschneidwerks 1 und in Ansicht (B) eine nach oben ausgelenkte Stellung des Bandschneidwerks 1. In der Mittenstellung des Bandschneidwerks 1 weisen die Seitensegmente 4 und das Mittensegment 3 eine im Wesentlichen in einer horizontalen Ebene liegende Orientierung auf.

Zwischen dem jeweiligen Seitensegment 4 und dem Mittensegment 3 wird auf der dem Boden 5 abgewandten Oberseite ein Winkel 24 von zirka 180° eingeschlossen.

Beim Erreichen eines Vorgewendes wird das Bandschneidwerk 1 durch die Ansteuerung der Linearaktoren am Einzugskanal 12 ausgehoben, wobei die Seitensegmente 4 im Allgemeinen in die in Fig. 4 Ansicht (A) gezeigte Mittenstellung überführt werden, in der zwischen dem jeweiligen Seitensegment 4 und dem Mittensegment 3 der Winkel 24 eingeschlossen wird.

Aufgrund der Arbeitsbreite des Bandschneidwerks 1 kann es zu Situationen kommen, in welchen das Überführen des ausgehobenen Bandschneidwerks 1 in die Mittenstellung nicht ausreicht, um mit den in der Mittenstellung befindlichen Seitensegmenten 4 beispielsweise ein Vorgewende kollisionsfrei zu durchfahren. Weitere Situationen, in denen die Mittenstellung nicht ausreichen kann, können das Umsetzen bzw. Feldwechsel des Mähdreschers 32 sein.

Fig. 4 zeigt in Ansicht (B) die ausgelenkte Stellung des Bandschneidwerks 1. Die Steuereinheit 20 ist dazu eingerichtet, in Abhängigkeit von einem in der Steuereinheit 20 hinterlegten oder hinterlegbaren Schwellwert 31 für den Schwenkwinkel 18 die Aktuatoren 16 anzusteuern, um die Seitensegmente 4 in eine ausgelenkte Stellung zu überführen, in welcher die Seitensegmente 4 unter einem, insbesondere maximal einnehmbaren, Winkel 25 relativ zum Mittensegment 3 hochgeschwenkt sind. Der Winkel 25, den die Seitensegmente 4 und das Mittensegment 3 auf ihrer dem Boden 5 zugewandten Unterseite einschließen, ist größer als 180°. Insbesondere ist die Steuereinheit 20 dazu ausgeführt und eingerichtet, die Ansteuerung der Aktuatoren 16 in Abhängigkeit von der Höhenverstellung des Einzugskanals 12 nur bei einem manuell ausgelösten Ausheben des Bandschneidwerks 1 vorzunehmen.

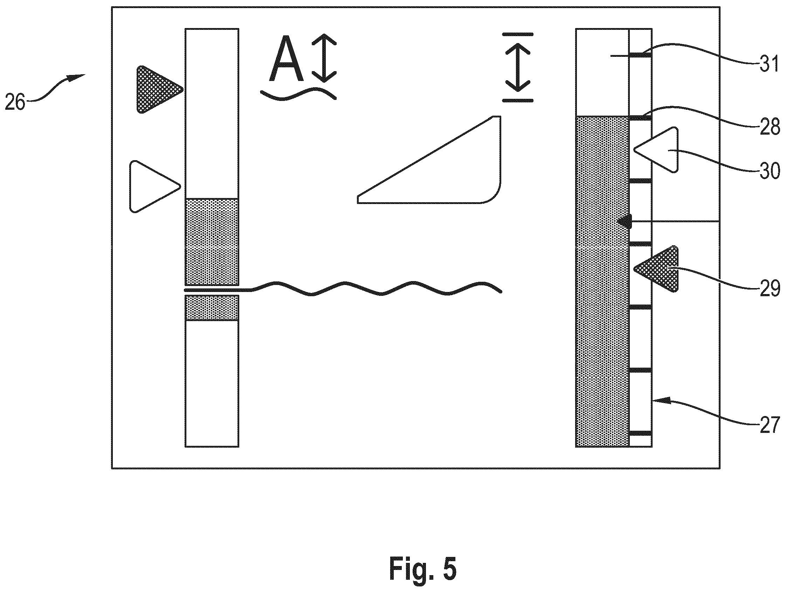

In Fig. 5 ist schematisch und exemplarisch eine Teildarstellung einer Bedienanzeige 26 des Mähdreschers 32 gezeigt. Eine aktuelle Position aufgrund des eingestellten Schwenkwinkels 18 des Einzugskanals 12 ist als Istwert 28 wird mittels einer Skala 27 veranschaulicht. Die Steuereinheit 20 ist in einem Automatikmodus betreibbar, in welchem ein erster Sollwert 29 und ein zweiter Sollwert 30 für den Schwenkwinkel 18 vorgegeben oder vorgebbar sind, um in Abhängigkeit von diesen Sollwerten 29, 30 die Seitensegmente 4 beim Ausheben des Bandschneidwerks 1 automatisch relativ zum Mittensegment 3 auszurichten.

Der einstellbare erste Sollwert 29 gibt die einzustellende Position des Bandschneidwerks 1 respektive des Schwenkwinkels 18 des Einzugskanals 12 vor, wenn von dem Bandschneidwerk 1 Erntegut aufgenommen werden soll. Der einstellbare zweite Sollwert 30, der größer als der erste Sollwert 29 ist, gibt die Position des Bandschneidwerks 1 respektive des Schwenkwinkels 18 des Einzugskanals 12 vor, wenn das Bandschneidwerk 1 beim Erreichen eines Vorgewendes im Automatikmodus automatisch ausgehoben werden soll.

In einer Situation, in welcher der Bediener erkennt, dass das Überführen der Seitensegmente 4 in ihre Mittenstellung beim Ausheben des Bandschneidwerks 1 im Automatikmodus, wie in Fig. 4 (A) gezeigt, nicht ausreicht, um ein Hindernis oder Unebenheiten des Bodens 5 in den äußeren Randbereichen eines Seitensegmentes 4 oder beider Seitensegmente 4 auszugleichen, kann der Bediener durch die dauerhafte Betätigung des Bedienelementes 23 den Automatikmodus übersteuern.

Hierzu steuert die Steuereinheit 20 in Abhängigkeit von einem in der Steuereinheit 20 hinterlegten oder hinterlegbaren Schwellwert 31 für den Schwenkwinkel 18 die Aktuatoren an, um die Seitensegmente 4 in eine ausgelenkte Stellung zu überführen, in welcher die Seitensegmente 4 unter dem maximal einnehmbaren Winkel 25 relativ zum Mittensegment 3 hochgeschwenkt sind, wie in Fig. 4 (B) dargestellt.

Beim Vorgang des manuellen Aushebens des Bandschneidwerks 1 nach dem Überschreiten des Schwellwertes 31 kann durch das Unterbrechen des Vorgangs eine Auslenkung der Seitensegmente 4 mit einem Wert für den Winkel 25 vorgeben wird, der unterhalb des Wertes für den maximal einnehmbaren Winkels 25 liegt, der sich in der maximal vom Boden 5 beabstandeten Stellung der Seitensegmente 4 einstellt. Nach dem Überschreiten des Schwellwertes 31 beim manuellen Ausheben wird die Auslenkung der Seitensegmente 4 gestartet. Durch das Unterbrechen des Vorgangs des manuellen Aushebens des Bandschneidwerks 1 lässt sich der Winkel 25, um welchen die Seitensegmente 4 relativ zum Mittensegment 3 hochgeschwenkt sind, einstellen.

Hierzu kann jeweils eine Sensoranordnung an den Rahmengelenken 15 zur Überwachung des sich einstellenden Winkels 25 zwischen dem Mittensegment 3 und den Seitensegmenten 4 angeordnet sein. Von den Sensoranordnungen generierte Sensorsignale können durch die Steuereinheit 20 ausgewertet werden, um dem Bediener den sich aktuell einstellenden Winkel 25 während des Vorgangs des manuellen Aushebens anzuzeigen. Bevorzugt können die Sensoranordnungen als Drehpotentiometer ausgeführt sein.

Die Steuereinheit 20 ist dazu ausgeführt und eingerichtet, die Ansteuerung der Aktuatoren 16 in Abhängigkeit von der Höhenverstellung des Einzugskanals 12 nur bei einem manuell ausgelösten Ausheben des Bandschneidwerks 1 vorzunehmen. Wird der Schwellwert 31 für den Schwenkwinkel 18 bei gleichzeitig manueller Betätigung passiert, übersteuert die Steuereinheit 20 den Automatikmodus temporär, um die Seitensegmente 4 in ihre, insbesondere maximal, nach oben ausgelenkte Stellung zu überführen.

### Bezugszeichenliste

- 1: Bandschneidwerk
- 2: Mittleres Rahmensegment
- 2A: Äußeres Rahmensegment
- 2B: Äußeres Rahmensegment
- 3: Mittensegment
- 4: Seitensegment
- 5: Boden
- 6: Messerbalken
- 7: Haspel
- 8: Förderband
- 9: Förderband
- 10: Einzugswalze
- 11: Öffnung
- 12: Einzugskanal
- 13: Achse
- 14: Schwenkachse
- 15: Rahmengelenk
- 16: Aktuator
- 17: Hydraulikzylinder
- 18: Schwenkwinkel
- 19: Sensor
- 20: Steuereinheit
- 21: Bedieneinheit
- 22: Multifunktionsgriff
- 23: Bedienelement
- 24: Winkel
- 25: Winkel
- 26: Bedienanzeige
- 27: Skala
- 28: Istwert
- 29: Erster Sollwert
- 30: Zweiter Sollwert
- 31: Schwellwert
- 32: Mähdrescher

## Patentansprüche

1. Selbstfahrender Mähdrescher (32), umfassend
- einen Einzugskanal (12), welcher zur Höhenverstellung durch Linearaktoren um eine horizontal verlaufende Achse (13) schwenkbar am Mähdrescher (32) angelenkt ist, sowie
- ein am Einzugskanal (12) angeordnetes Bandschneidwerk (1), welches ein Mittensegment (3) mit einem mittleren Rahmensegment (2) und zwei Seitensegmente (4) mit jeweils einem äußeren Rahmensegment (2A, 2B) aufweist,
- wobei das jeweilige Seitensegment (4) durch ein eine Schwenkachse (14) umfassendes Rahmengelenk (15) schwenkbar mit dem Mittensegment (3) verbunden ist,
- wobei das jeweilige Seitensegment (4) durch einen ansteuerbaren Aktuator (16) relativ zum Mittensegment (3) positionierbar ist,
**dadurch gekennzeichnet,**
- **dass** der Mähdrescher (32) eine Steuereinheit (20) umfasst, die dazu ausgeführt und eingerichtet ist, die Aktuatoren (16) anzusteuern, um die Seitensegmente (4) in Abhängigkeit von der Höhenverstellung des Einzugskanals (12) beim Ausheben des Bandschneidwerks (1) relativ zum Mittensegment (3) auszurichten,
- **dass** zumindest ein Sensor (19) vorgesehen ist, welcher Signale für einen Schwenkwinkel (18) des Einzugskanals (12) generiert und an die Steuereinheit (20) überträgt, die zur Bestimmung der Höhenverstellung des Einzugskanals (12) von dem zumindest einen Sensor (19) empfangene Signale auswertet, und
**dass** die Steuereinheit (20)
- in Abhängigkeit von einem in der Steuereinheit (20) hinterlegten oder hinterlegbaren Schwellwert (31) für den Schwenkwinkel (18) des Einzugskanals (12)
- die Aktuatoren (16) für die Seitensegmente (4) ansteuert, um
- die Seitensegmente (4) in eine ausgelenkte Stellung zu überführen, in welcher die Seitensegmente (4) unter einem, insbesondere maximal einnehmbaren, Winkel (25) relativ zum Mittensegment (3) hochgeschwenkt sind.

2. Mähdrescher (32) nach Anspruch 1, **dadurch gekennzeichnet, dass** zur Überwachung des sich einstellenden Winkels (25) zwischen dem Mittensegment (3) und den Seitensegmenten (4) jeweils eine Sensoranordnung an den Rahmengelenken (15) angeordnet ist.

3. Mähdrescher (32) nach Anspruch 1 oder 2, **dadurch gekennzeichnet, dass** die Steuereinheit (20) dazu ausgeführt und eingerichtet ist, die Ansteuerung der Aktuatoren (16) in Abhängigkeit von der Höhenverstellung des Einzugskanals (12) nur bei einem manuell ausgelösten Ausheben des Bandschneidwerks (1) vorzunehmen.

4. Mähdrescher (32) nach einem der Ansprüche 1 bis 3, **dadurch gekennzeichnet, dass** die Steuereinheit (20) in einem Automatikmodus betreibbar ist, in welchem
- ein vorzugsweise einstellbarer erster Sollwert (29) und
- ein vorzugsweise einstellbarer zweiter Sollwert (30) für den Schwenkwinkel (18) des Einzugskanals (12)
vorgebbar sind, um in Abhängigkeit von diesen Sollwerten (29, 30) die Seitensegmente (4) beim Ausheben des Bandschneidwerks (1) automatisch relativ zum Mittensegment (3) auszurichten.

5. Mähdrescher (32) nach Anspruch 4, **dadurch gekennzeichnet, dass** die beiden Sollwerte (29, 30) unterhalb des Schwellwerts (31) für den Schwenkwinkel (18) des Einzugskanals (12) liegen.

6. Mähdrescher (32) nach Anspruch 4 oder 5, **dadurch gekennzeichnet, dass**
- der einstellbare erste Sollwert (29) die einzustellende Position des Bandschneidwerks (1) und/oder des Schwenkwinkels (18) des Einzugskanals (12), wenn von dem Bandschneidwerk (1) Erntegut aufgenommen werden soll, vorgibt und/oder
- der einstellbare zweite Sollwert (30) die Position des Bandschneidwerks (1) und/oder des Schwenkwinkels (18) des Einzugskanals (12), wenn das Bandschneidwerk (1) beim Erreichen eines Vorgewendes im Automatikmodus automatisch ausgehoben werden soll, vorgibt.

7. Mähdrescher (32) nach einem der Ansprüche 4 bis 6, **dadurch gekennzeichnet, dass** die Steuereinheit (20) dazu eingerichtet ist, den Automatikmodus beim Ausheben des Bandschneidwerks (1) durch eine manuelle Eingabe mittels einer Bedieneinheit (22) zu übersteuern.

8. Mähdrescher (32) nach einem der Ansprüche 1 bis 7, **dadurch gekennzeichnet, dass** die Aktuatoren (16) als Hydraulikzylinder (17) ausgeführt sind, die mit einem Druckspeicher in Verbindung stehen, sodass die als Hydraulikzylinder (17) ausgeführten Aktuatoren (16) als hydraulische Federn verwendbar sind.

9. Verfahren zum Betreiben eines selbstfahrenden Mähdreschers (32), umfassend
- einen Einzugskanal (12), welcher zur Höhenverstellung durch Linearaktoren um eine horizontale Achse (13) geschwenkt wird, sowie
- ein am Einzugskanal (12) angeordnetes Bandschneidwerk (1), welches ein Mittensegment (3) mit einem mittleren Rahmensegment (2) und zwei Seitensegmente (4) mit jeweils einem äußeren Rahmensegment (2A, 2B) aufweist,
- wobei das jeweilige Seitensegment (4) durch ein eine Schwenkachse (14) umfassendes Rahmengelenk (15) schwenkbar mit dem Mittensegment (3) verbunden ist,
- wobei das jeweilige Seitensegment (4) durch einen ansteuerbaren Aktuator (16) relativ zum Mittensegment (3) positioniert wird,
**dadurch gekennzeichnet,**
- **dass** der Mähdrescher (32) durch eine Steuereinheit (20) angesteuert wird, durch welche die Aktuatoren (16) angesteuert werden, um die Seitensegmente (4) in Abhängigkeit von der Höhenverstellung des Einzugskanals (12) beim Ausheben des Bandschneidwerks (1) relativ zum Mittensegment (3) auszurichten,
- **dass** durch zumindest einen Sensor (19) Signale für einen Schwenkwinkel (18) des Einzugskanals (12) generiert und an die Steuereinheit (20) übertragen werden, durch welche die Signale zur Bestimmung der Höhenverstellung des Einzugskanals (12) ausgewertet werden, und
- **dass** in Abhängigkeit von einem in der Steuereinheit (20) hinterlegten oder hinterlegbaren Schwellwert (31) für den Schwenkwinkel (18) des Einzugskanals (12) die Seitensegmente (4) in eine ausgelenkte Stellung überführt werden, in welcher die Seitensegmente (4) unter einem, insbesondere maximal einnehmbaren, Winkel (25) relativ zum Mittensegment (3) hochgeschwenkt sind.

10. Verfahren nach Anspruch 9, **dadurch gekennzeichnet, dass**
- beim manuellen Ausheben des Bandschneidwerks (1)
- nach dem Überschreiten des Schwellwertes (31) für den Schwenkwinkel (18) des Einzugskanals (12)
- durch das Unterbrechen des Vorgangs des manuellen Aushebens des Bandschneidwerks (1)
- eine Auslenkung der Seitensegmente (4) unter dem Winkel (25) vorgegeben wird, der unterhalb des maximal einnehmbaren Winkels liegt, der sich in der maximal vom Boden (5) beabstandeten Stellung der Seitensegmente (4) einstellt.

11. Verfahren nach einem der Ansprüche 9 bis 10, **dadurch gekennzeichnet, dass** die Ansteuerung der Aktuatoren (16) in Abhängigkeit von der Höhenverstellung des Einzugskanals (12) nur bei einem manuell ausgelösten Ausheben des Bandschneidwerks (1) vorgenommen wird.

## Claims

1. Self-propelled combine harvester (32), comprising
- an intake channel (12) which is connected in an articulated manner to the combine harvester (32) pivotably about a horizontally running axis (13) by linear actuators for vertical adjustment, and
- a draper header (1) which is arranged on the intake channel (12) and has a middle segment (3) with a middle frame segment (2) and two side segments (4) each with an outer frame segment (2A, 2B),
- wherein the respective side segment (4) is pivotably connected to the middle segment (3) by a frame joint (15) which comprises a pivot axis (14),
- wherein the respective side segment (4) can be positioned relative to the middle segment (3) by an actuatable actuator (16),
**characterized**
- **in that** the combine harvester (32) comprises a control unit (20) which is designed and configured to actuate the actuators (16) in order to orient the side segments (4) relative to the middle segment (3) depending on the vertical adjustment of the intake channel (12) when the draper header (1) is raised,
- **in that** at least one sensor (19) is provided, which generates signals for a pivot angle (18) of the intake channel (12) and transmits them to the control unit (20) which evaluates signals received by the at least one sensor (19) for determining the vertical adjustment of the intake channel (12), and
**in that** the control unit (20),
- depending on a threshold value (31) for the pivot angle (18) of the intake channel (12) stored or storable in the control unit (20),
- actuates the actuators (16) for the side segments (4) in order
- to move the side segments (4) to a deflected position in which the side segments (4) are pivoted upwards at an angle (25), in particular which can be assumed at maximum, relative to the middle segment (3).

2. Combine harvester (32) according to Claim 1, **characterized in that** a sensor arrangement is arranged on each of the frame joints (15) for monitoring the resulting angle (25) between the middle segment (3) and the side segments (4).

3. Combine harvester (32) according to Claim 1 or 2, **characterized in that** the control unit (20) is designed and configured to actuate the actuators (16) depending on the vertical adjustment of the intake channel (12) only when the draper header (1) is raised in a manually initiated manner.

4. Combine harvester (32) according to any of Claims 1 to 3, **characterized in that** the control unit (20) can be operated in an automatic mode in which
- a preferably adjustable first target value (29) and
- a preferably adjustable second target value (30) for the pivot angle (18) of the intake channel (12)
can be specified in order to automatically orient the side segments (4) relative to the middle segment (3) when the draper header (1) is raised depending on these target values (29, 30).

5. Combine harvester (32) according to Claim 4, **characterized in that** the two target values (29, 30) lie below the threshold value (31) for the pivot angle (18) of the intake channel (12).

6. Combine harvester (32) according to Claim 4 or 5, **characterized in that**
- the adjustable first target value (29) specifies the position to be set of the draper header (1) and/or the pivot angle (18) of the intake channel (12) when harvested crop is intended to be picked up by the draper header (1), and/or
- the adjustable second target value (30) specifies the position of the draper header (1) and/or the pivot angle (18) of the intake channel (12) when the draper header (1) is intended to be automatically raised in the automatic mode when a headland is reached.

7. Combine harvester (32) according to any of Claims 4 to 6, **characterized in that** the control unit (20) is configured to override the automatic mode by a manual input by means of an operator control unit (22) when the draper header (1) is raised.

8. Combine harvester (32) according to any of Claims 1 to 7, **characterized in that** the actuators (16) are designed as hydraulic cylinders (17) which are connected to a pressure accumulator, so that the actuators (16) designed as hydraulic cylinders (17) can be used as hydraulic springs.

9. Method for operating a self-propelled combine harvester (32), comprising
- an intake channel (12) which is pivoted about a horizontal axis (13) for vertical adjustment by linear actuators, and
- a draper header (1) which is arranged on the intake channel (12) and has a middle segment (3) with a middle frame segment (2) and two side segments (4) each with an outer frame segment (2A, 2B),
- wherein the respective side segment (4) is pivotably connected to the middle segment (3) by a frame joint (15) which comprises a pivot axis (14),
- wherein the respective side segment (4) is positioned relative to the middle segment (3) by an actuatable actuator (16),
**characterized**
- **in that** the combine harvester (32) is actuated by a control unit (20) by which the actuators (16) are actuated in order to orient the side segments (4) relative to the middle segment (3) depending on the vertical adjustment of the intake channel (12) when the draper header (1) is raised,
- **in that** signals for a pivot angle (18) of the intake channel (12) are generated by at least one sensor (19) and transmitted to the control unit (20) by which the signals are evaluated for determining the vertical adjustment of the intake channel (12), and
- **in that**, depending on a threshold value (31) for the pivot angle (18) of the intake channel (12) stored or storable in the control unit (20), the side segments (4) are moved to a deflected position in which the side segments (4) are pivoted upwards at an angle (25), in particular which can be assumed at maximum, relative to the middle segment (3).

10. Method according to Claim 9, **characterized in that**,
- when the draper header (1) is manually raised
- after the threshold value (31) for the pivot angle (18) of the intake channel (12) has been exceeded,
- by interrupting the process of manually raising the draper header (1)
- a deflection of the side segments (4) is specified at the angle (25) which lies below the angle which can be assumed at a maximum and results in the position of the side segments (4) at maximum distance from the ground (5).

11. Method according to either of Claims 9 and 10, **characterized in that** the actuators (16) are actuated depending on the vertical adjustment of the intake channel (12) only when the draper header (1) is raised in a manually initiated manner.

## Revendications

1. Moissonneuse-batteuse (32) automotrice, comprenant :
- un canal d'alimentation (12) qui est articulé sur la moissonneuse-batteuse (32) avec possibilité de pivotement autour d'un axe (13) s'étendant horizontalement, en vue du réglage en hauteur par des actionneurs linéaires, ainsi que
- un tablier de coupe à tapis (1) qui est disposé sur le canal d'alimentation (12) et présente un segment central (3), avec un segment de châssis central (2), et deux segments latéraux (4), respectivement avec un segment de châssis extérieur (2A, 2B),
- le segment latéral (4) respectif étant relié au segment central (3) avec possibilité de pivotement par une articulation de châssis (15) comportant un axe de pivotement (14),
- le segment latéral (4) respectif pouvant être positionné par rapport au segment central (3) par un actionneur (16) susceptible d'être commandé,
**caractérisée en ce que**
- la moissonneuse-batteuse (32) comprend une unité de commande (20) qui est réalisée et conçue pour activer les actionneurs (16), en vue d'orienter les segments latéraux (4) par rapport au segment central (3) en fonction du réglage en hauteur du canal d'alimentation (12) lors du levage du tablier de coupe à tapis (1),
- **en ce qu'**il est prévu au moins un capteur (19) qui génère des signaux pour un angle de pivotement (18) du canal d'alimentation (12) et les transmet à l'unité de commande (20), laquelle analyse les signaux reçus du capteur (19), au nombre d'au moins un, aux fins de déterminer le réglage en hauteur du canal d'alimentation (12), et
**en ce que** l'unité de commande (20)
- en fonction d'une valeur seuil (31) pour l'angle de pivotement (18) du canal d'alimentation (12), qui est enregistrée ou peut être enregistrée dans l'unité de commande (20),
- active les actionneurs (16) pour les segments latéraux (4), aux fins de
- amener les segments latéraux (4) dans une position déviée dans laquelle les segments latéraux (4) sont pivotés vers le haut par rapport au segment central (3) sous un angle (25), notamment un angle maximal pouvant être atteint.

2. Moissonneuse-batteuse (32) selon la revendication 1, **caractérisée en ce que**, pour la surveillance de l'angle (25) s'établissant entre le segment central (3) et les segments latéraux (4), un dispositif à capteur est installé respectivement sur les articulations de châssis (15).

3. Moissonneuse-batteuse (32) selon la revendication 1 ou 2, **caractérisée en ce que** l'unité de commande (20) est réalisée et conçue pour effectuer l'activation des actionneurs (16) en fonction du réglage en hauteur du canal d'alimentation (12), uniquement en cas de déclenchement manuel du levage du tablier de coupe à tapis (1).

4. Moissonneuse-batteuse (32) selon une des revendications 1 à 3, **caractérisée en ce que** l'unité de commande (20) peut être exploitée en mode automatique dans lequel peuvent être prédéfinies
- une première valeur de consigne (29), de préférence réglable, et
- une deuxième valeur de consigne (30), de préférence réglable, pour l'angle de pivotement (18) du canal d'alimentation (12),
aux fins d'orienter les segments latéraux (4) automatiquement par rapport au segment central (3), en fonction de ces valeurs de consigne (29, 30), lors du levage du tablier de coupe à tapis (1).

5. Moissonneuse-batteuse (32) selon la revendication 4, **caractérisée en ce que** les deux valeurs de consigne (29, 30) sont inférieures à la valeur seuil (31) pour l'angle de pivotement (18) du canal d'alimentation (12).

6. Moissonneuse-batteuse (32) selon la revendication 4 ou 5, **caractérisée en ce que**
- la première valeur de consigne (29) réglable prédéfinit la position à régler pour le tablier de coupe à tapis (1) et/ou pour l'angle de pivotement (18) du canal d'alimentation (12), si le tablier de coupe à tapis (1) doit recueillir des produits à récolter, et/ou
- la deuxième valeur de consigne (30) réglable prédéfinit la position du tablier de coupe à tapis (1) et/ou de l'angle de pivotement (18) du canal d'alimentation (12), si le tablier de coupe à tapis (1) doit être levé automatiquement en mode automatique lorsqu'une tournière est atteinte.

7. Moissonneuse-batteuse (32) selon une des revendications 4 à 6, **caractérisée en ce que** l'unité de commande (20) est conçue pour prendre le pas sur le mode automatique lors du levage du tablier de coupe à tapis (1), par le biais d'une saisie manuelle à l'aide d'une unité opérateur (22).

8. Moissonneuse-batteuse (32) selon une des revendications 1 à 7, **caractérisée en ce que** les actionneurs (16) sont réalisés sous forme de vérins hydrauliques (17) qui sont reliés à un réservoir de pression, de sorte que les actionneurs (16) réalisés sous forme de vérins hydrauliques (17) peuvent être utilisés comme ressorts hydrauliques.

9. Procédé pour faire fonctionner une moissonneuse-batteuse (32) automotrice comprenant
- un canal d'alimentation (12) qui est pivoté autour d'un axe horizontal (13) en vue du réglage en hauteur par des actionneurs linéaires, ainsi que
- un tablier de coupe à tapis (1) qui est disposé sur le canal d'alimentation (12) et présente un segment central (3), avec un segment de châssis central (2), et deux segments latéraux (4), respectivement avec un segment de châssis extérieur (2A, 2B),
- le segment latéral (4) respectif étant relié au segment central (3) avec possibilité de pivotement par une articulation de châssis (15) comportant un axe de pivotement (14),
- le segment latéral (4) respectif étant positionné par rapport au segment central (3) par un actionneur (16) susceptible d'être activé,
**caractérisé en ce que**
- la moissonneuse-batteuse (32) est commandée par une unité de commande (20) qui active les actionneurs (16) aux fins d'orienter les segments latéraux (4) par rapport au segment central (3) en fonction du réglage en hauteur du canal d'alimentation (12), lors du levage du tablier de coupe à tapis (1),
- **en ce qu'**au moins un capteur (19) génère des signaux pour un angle de pivotement (18) du canal d'alimentation (12) et les transmet à l'unité de commande (20), laquelle analyse les signaux aux fins de déterminer le réglage en hauteur du canal d'alimentation (12), et
- **en ce que**, en fonction d'une valeur seuil (31) pour l'angle de pivotement (18) du canal d'alimentation (12), qui est enregistrée ou peut être enregistrée dans l'unité de commande (20), les segments latéraux (4) sont amenés dans une position déviée dans laquelle les segments latéraux (4) sont pivotés vers le haut par rapport au segment central (3), en formant un angle (25), notamment un angle maximal pouvant être atteint.

10. Procédé selon la revendication 9, **caractérisé en ce que**
- lors du levage manuel du tablier de coupe à tapis (1),
- après le dépassement de la valeur seuil (31) pour l'angle de pivotement (18) du canal d'alimentation (12),
- par interruption de l'opération de levage manuel du tablier de coupe à tapis (1),
- une déviation des segments latéraux (4) est prédéfinie sous l'angle (25) qui est inférieur à l'angle maximal pouvant être atteint, lequel se règle dans la position des segments latéraux (4) située à la distance maximale du sol (5).

11. Procédé selon une des revendications 9 à 10, **caractérisé en ce que** l'activation des actionneurs (16) est réalisée en fonction du réglage en hauteur du canal d'alimentation (12), uniquement en cas de déclenchement manuel du levage du tablier de coupe à tapis (1).
